# EUROPEAN PATENT SPECIFICATION

(11) **EP 2 852 767 B1**
(45) Date of publication and mention of the grant of the patent: **12.10.2016**
(21) Application number: 14711117.3
(22) Date of filing: 04.03.2014
(51) Int. Cl.: F16B 19/05

(54) **SWAGE INDICATING COLLAR**
BUND MIT PRESSANZEIGE
COLLIER D'INDICATION DE SERTISSAGE

(30) Priority: 15.03.2013 US 201313832974
(43) Date of publication of application: 01.04.2015
(73) Proprietor: Alcoa Inc., Pittsburgh, PA 15212-5858 (US)
(72) Inventor: CORBETT, Robert, J., Woodway, TX 76712 (US)
(74) Representative: Trinks, Ole
(86) International application number: PCT/US2014/020250
(87) International publication number: WO 2014/149673

(56) References cited:
- DE-A1- 2 151 847
- GB-A- 2 106 479
- US-A- 2 531 049
- US-A- 2 804 798
- US-A- 4 867 625
- US-A- 4 983 084
- US-A- 4 995 777
- US-A1- 2013 202 383
- US-B2- 7 293 339

## Description

### Technical of the Invention

The present invention relates to fasteners and, more particularly, a fastener including a swage indicating collar.

### Background Art

Two-piece swaged fasteners (see e.g. US 7 293 339 B2), commonly referred to as lockbolts, are used to secure a plurality of workpieces together. Typically swage-type fasteners include a pin member having lock grooves and a swage collar adapted to be swaged into the lock grooves of the pin member by a fastener installation tool. The collar may include a built-in washer or a flange, which supports high clamp load in workpieces made from soft steels or aluminum without embedment. In many applications, the collar is installed against medium to high strength steel, which do not require as much bearing area as required for soft steels and aluminum. The collar may also include raised inspection dots extending from the collar flange that are marked by the installation tool to visually indicate a complete swage of the collar and installed properties. What is needed is a swage collar that utilizes less material, while providing adequate bearing area and a visual indication of a complete swage.

### Disclosure of the Invention

In an embodiment, a swage collar includes a shank having a first end, a second end opposite the first end, and an outside diameter; a flange extending circumferentially from the first end of the shank and having an outer diameter; and a scalloped shoulder formed at a location proximate to where the first end of the shank transitions to the flange, wherein the swage collar is adapted to be swaged, and wherein when the swage collar is swaged, the shoulder is deformed from an undeformed state to a deformed state wherein the shoulder is blended with the outside diameter of the shank and the outer diameter of the flange. In an embodiment, the shoulder is in its deformed state, the transition step includes a curved portion. In an embodiment, the curved portion includes a radius of curvature. In an embodiment, the shank includes a bore extending from the first end to the second end of the shank, an inner surface defined by the bore, and a fit-up tab extending from the inner surface. In an embodiment, the swage collar further comprises at least one material selected from the group consisting of low carbon steel, annealed low carbon steel, and unannealed low carbon steel. In an embodiment, the swage collar is as-headed. In an embodiment, the shank includes knurling formed circumferentially on the outside diameter and proximate to the second end thereof.

In an embodiment, a fastener including a pin member having an elongated shank portion which terminates at one end in a head and includes a threaded portion having a plurality of threads with lock grooves; and a swage collar including a shank having a first end, a second end opposite the first end, and an outside diameter, a flange extending circumferentially from the first end of the shank of the swage collar and having an outer diameter, and a scalloped shoulder formed at a location where the first end of the shank transitions to the flange, wherein the swage collar is adapted to be swaged onto the lock grooves of the threaded portion of the pin member, and wherein when the swage collar is swaged, the shoulder is deformed from an undeformed state to a deformed state wherein the shoulder is blended with the outside diameter of the shank of the swage collar and the outer diameter of the flange.

### Brief Description of the Drawings

- FIG. 1: is an exploded, side elevational view of a fastener constructed in accordance with an embodiment of the present invention;
- FIG. 2: is a side elevational view of a swage collar employed by the fastener shown in FIG. 1;
- FIG. 2A: is an enlarged view showing detail 2A in FIG. 2;
- FIG. 3: is a top plan view of the swage collar shown in FIG. 2;
- FIG. 4: is a side, partial cross-sectional view of the fastener shown in FIG. 1 in an installed position, a portion a collar being shown in a minimum grip position, and a portion of another similar collar shown in a maximum grip position for the purposes of comparison;
- FIG. 4A: is an enlarged view showing detail 4A in FIG. 4;
- FIG. 5: is side elevational view of the swage collar shown in FIG. 2, as compared to and superimposed with a flange portion of an existing collar of comparable size, which is shown in phantom;
- FIG. 6: is a perspective view of a swage collar constructed in accordance with another embodiment; and
- FIGS. 7A and 7B: are side and front elevational views, respectively, of a swage collar constructed not in accordance with the invention.

### Best Mode for Carrying Out the Invention

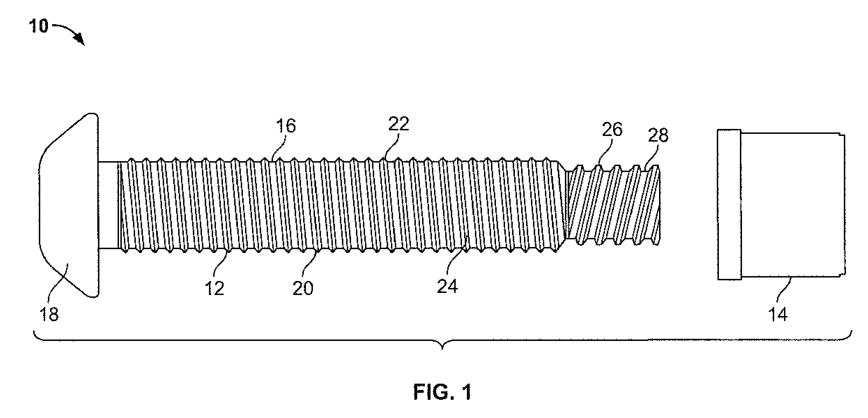

Referring to FIG. 1, in an embodiment, a fastener 10 including a pin member 12 and a swage collar 14 that is sized and shaped to mate with and be swaged onto the pin member 12. In an embodiment, the pin member 12 includes an elongated shank portion 16 which terminates at one end in a head 18. In an embodiment, the shank portion 16 includes a threaded portion 20 having a plurality of threads 22 with lock grooves 24, and a pull portion 26 having a plurality of pull grooves 28. In an embodiment, the pin member 12 is made from medium carbon alloy steel. In an embodiment, the pin member 12 is a Grade 8 strength level bolt. In other embodiments, the pin member 12 can be characterized by any grade known in the art, such as, for example, Grade 2, Grade 5, Grade 8, Class 8.8, and Class 10.9. In other embodiments, the pin member 12 may be made from other suitable materials known in the art. In other embodiments, the pin member 12 can consist of any of the pin members as disclosed and described in U.S. Patent No. 7,293,339 to Mercer et al.

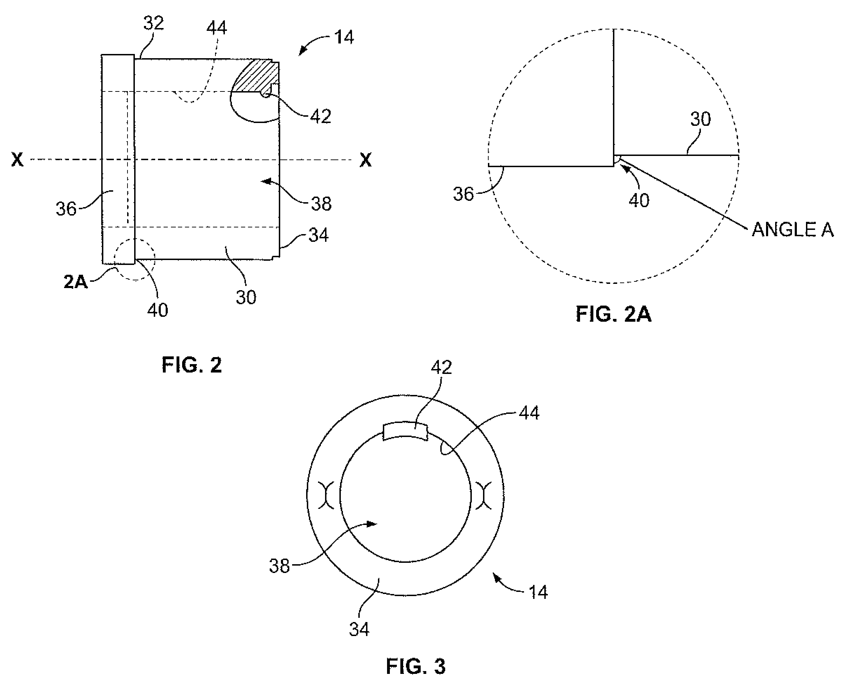

Referring to FIGS. 2, 2A and 3, the swage collar 14 includes a tubular-shaped shank 30 having a first end 32 and a second end 34 opposite the first end 32, a flange 36 extending circumferentially from and at the first end 32, and a through bore 38 extending from the first end 32 to the second end 34. In an embodiment, the shank 30 includes a generally uniform, cylindrical configuration. In an embodiment, in an undeformed state, the swage collar 14 includes an abrupt transition step or shoulder 40 formed at a location where the first end 32 of the shank 30 transitions to the flange 36. In an embodiment, in an undeformed state, the transition step 40 is linear or substantially linear. In an embodiment, in an undeformed state, the transition step 40 is oriented at an Angle A of about 90 degrees from longitudinal axis X-X of the swage collar 14 (see FIG. 2A). In another embodiment, in an undeformed state, the transition step 40 is oriented at Angle A of about 120 degrees from axis X-X. In another embodiment, in an undeformed state, the transition step 40 is oriented at Angle A of about 135 degrees from axis X-X. In another embodiment, in an undeformed state, the transition step is oriented at Angle A falling within a range of about 90 degrees to about 135 degrees from axis X-X. In an embodiment, in an undeformed state, the transition step 40 visually indicates and differentiates the first and second ends 32, 34 of the collar 14 for installation.

In an embodiment, the swage collar 14 includes an internal fit-up tab 42 extending from an inner surface 44 of the collar 14. In an embodiment, the fit-up tab 42 includes a single thread, such as that shown in U.S. Patent No. 4,867,625 to Dixon. In an embodiment, the fit-up tab 42 is positioned proximate to the second end 34 of the shank 30 of the swage collar 14. In another embodiment, the fit-up tab 42 is positioned proximate to the first end 32 of the shank 30 of the swage collar 14. The purpose and function of the fit-up tab 42 shall be described below. In another embodiment, the swage collar 14 need not include the fit-up tab 42.

In an embodiment, the swage collar 14 is made of low carbon steel. In another embodiment, the swage collar 14 is made from unannealed low carbon steel. In another embodiment, the swage collar 14 is made from annealed low carbon steel. In another embodiment, the swage collar 14 is "as-headed" and does not require thermal processing, as disclosed and described in aforesaid U.S. Patent No. 7,293,339 to Mercer et al. As employed herein, the term "as-headed" refers to a collar which is strain hardened, for example, from cold working, rather than changing hardness using a thermal process (e.g., quench and tempering; stress relieving; etc.).

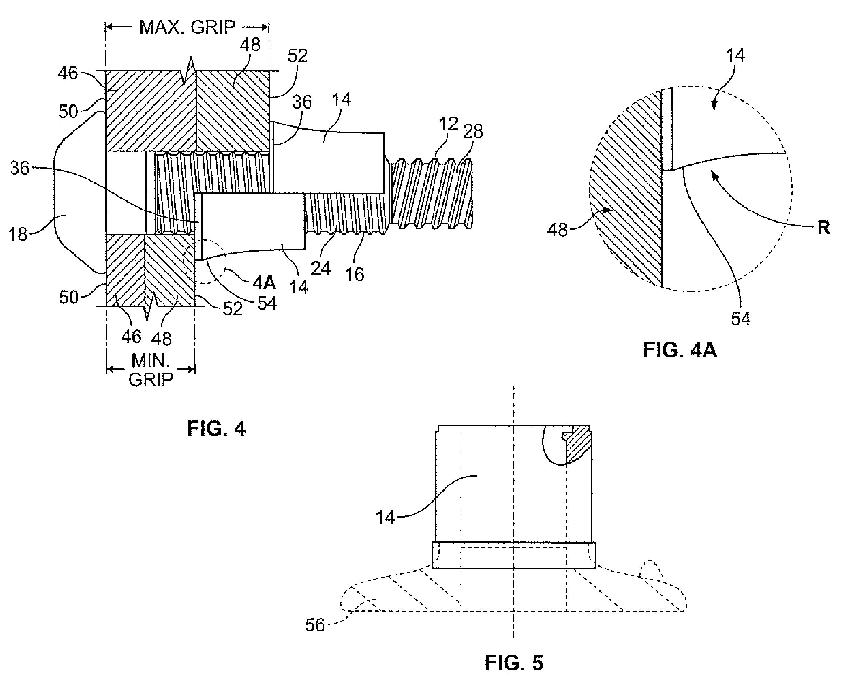

Referring to FIG. 4, in an embodiment, the swage collar 14 and the pin member 12 are adapted to secure a plurality of workpieces 46, 48 together. In an embodiment, the shank portion 16 of the pin member 12 is inserted through holes of the workpieces 46, 48, with the head 18 abutting one side 50 of the workpiece 46 and the shank portion 16 extending outwardly from one side 52 of the workpiece 48. In an embodiment, the swage collar 14 is fitted on the shank portion 16 of the pin member 12, whereby the shank portion 16 is inserted within the through bore 38 of the collar 14 (as shown in FIGS. 2 and 3) and the fit-up tab 42 threadedly engages the threads 22 of the pin member 12 to initially retain the collar 14 on the pin member 12. In an embodiment, the swage collar 14 is fitted on the pin member 12 until the flange 36 of the collar 14 abuts the side 52 of the workpiece 48.

In an embodiment, the pull grooves 28 of the pin member 12 are adapted to be gripped by matching teeth of chuck jaws of a fastener installation tool having a swage anvil (not shown in the Figures). In an embodiment, the fastener installation tool may consist of the tools disclosed and described in aforesaid U.S. Patent No. 7,293,339 to Mercer et al. In an embodiment, the swage anvil of the tool is adapted to engage the swage collar 14 and apply a relative axial force between the collar 14 and the pin member 12, and to move over the collar 14 and swage it into the lock grooves 24 of the pin member 12 (not shown in the Figures). In an embodiment, during the installation process, the transition step 40 of the collar 14 (shown in FIGS. 2 and 2A) is swaged and deforms inwardly to a deformed state. FIG. 4 shows the collar 14 fully installed on the pin member 12, showing both the minimum grip when used for securing thinner workpieces 46, 48, and the maximum grip when used for securing thicker workpieces 46, 48. In an embodiment, when the collar 14 is fully and properly installed, the transition step 40 (in its deformed state) is blended into the outside diameter of the collar 14, as shown in FIG. 4, specifically, an outside diameter of the shank 30 and an outer diameter of the flange 36, and is characterized as a smooth, flowing curved portion 54. In an embodiment, the curved portion 54 provides a visual indication that the collar 14 has been completely swaged and installed onto the pin member 12, and that the workpieces 46, 48 are secured to one another. In an embodiment, as shown in FIG. 4A, the curved portion 54 has a radius of curvature R. In an embodiment, for a 1.27 cm (1/2 inch) fastener 10, the radius of curvature R is about 1.21 cm (0.476 inch). In an embodiment, for a 1.5875 cm (5/8 inch) fastener 10, the radius of curvature R is about 1.5113 cm (0.595 inch). In an embodiment, for a 1.905 cm (0.75 inch) fastener 10, the radius of curvature R is about 1.814 cm (0.714 inch). When fully installed, the flange 36 is sized and shaped to provide an adequate bearing area to support the retained clamp load without embedment of the collar 14 in the workpiece 48. In an embodiment, because of the reduced size of the flange 36, the amount of material required to make the collar 14 is less than that required for a comparable flanged collar 56 known in the art, as shown in phantom in FIG. 5. In an embodiment, a material reduction of about 10 to 15% is obtained.

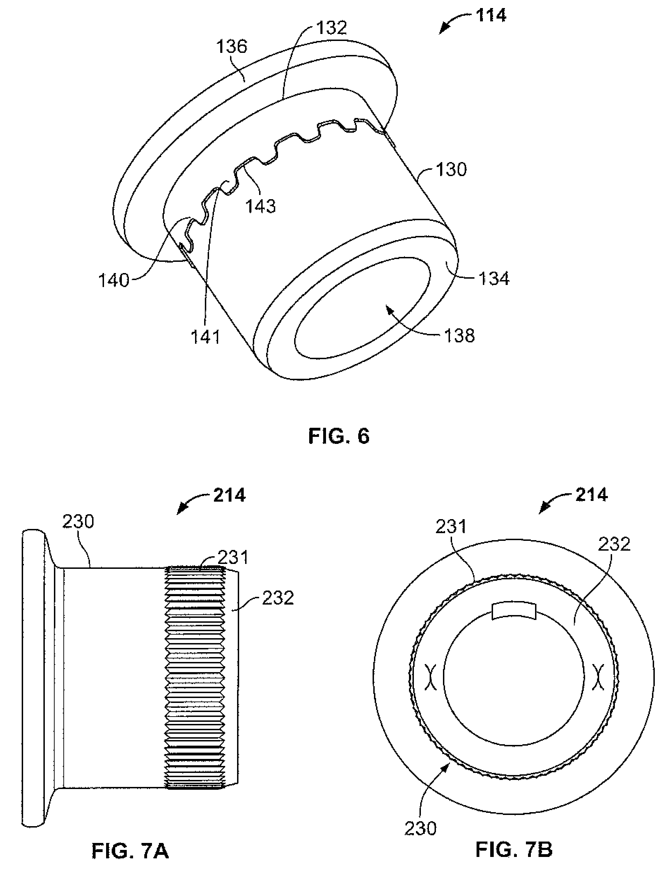

FIG. 6 illustrates a swage collar 114 in accordance with another embodiment. The swage collar 114 is structured and functions similar to the collar 14 with the following differences. In an embodiment, the swage collar 114 includes a tubular-shaped shank 130 having a first end 132 and a second end 134 opposite the first end 132, a flange 136 extending circumferentially from and at the first end 132, and a through bore 138 extending from the first end 132 to the second end 134. In an embodiment, the shank 130 includes a scalloped/wavy shoulder 140 that extends from the first end 132 to an area intermediate the first and second ends 132, 134. In an embodiment, the shoulder 140 includes a plurality of peaks 141 and a plurality of valleys 143 that alternate with one another, as shown in FIG. 6 which impart visually multiple sections of the shoulder 140. In an embodiment, the peaks 141 and the valleys 143 of the shoulder 140 form a trapezoidal wave shape. In other embodiments, the peaks 141 and the valleys 143 of the shoulder 140 can consist of other shapes and sizes. In an embodiment, during the installation process, the shoulder 140 of the collar 114 is swaged and deforms inwardly to a deformed state. In an embodiment, when the collar 114 is fully and properly installed, the shoulder 140 (in its deformed state), and particularly the peaks 141 and the valleys 143, are blended into the outside diameter of the collar 114, and characterized by multiple smooth, flowing curved portions therearound (not shown in the Figures). In an embodiment, the curved portions provide various points of visual indication all around the outside diameter of the collar 114 that the collar 114 has been completely swaged and installed onto a pin member and that the workpieces are secured to one another. If one or more of the peaks 141 and/or the valleys 143 are not blended into the outside diameter of the collar 114, this provides a visual indication that the collar 114 has not been completely swaged.

FIG. 7 illustrates a swage collar 214 not in accordance with the invention. The swage collar 214 is structured and functions similar to the collar 14, except that a shank 230 includes knurling 231 formed circumferentially on the outside diameter thereof and located proximate to a second end 234 of the shank 230. The knurling 231 is deformable when an installation tool is applied thereon, even in the event that the tool does not completely swage the collar 214, thus providing a visual indication of whether the tool was applied at all thereto. In an embodiment, the collar 114 shown in FIG. 6 and described above includes the knurling 231 (not shown in the Figures).

It should be understood that the embodiments described herein are merely exemplary and that a person skilled in the art may make many variations and modifications without departing from the scope of the invention.

## Claims

1. A swage collar (114) in an undeformed state, comprising:
- a shank (130) having a first end (132), a second end (134) opposite the first end (132), and an outside diameter;
- a flange (136) extending circumferentially from the first end (132) of the shank (130) and having an outer diameter;
**characterized by**
- a scalloped shoulder (140) formed at a location proximate to where the first end (132) of the shank (130) transitions to the flange (136),
wherein the swage collar (114) is adapted and suited to be swaged, during which the scalloped shoulder (140) is deformed from an undeformed state to a deformed state, in which the scalloped shoulder (140) is blended with the outside diameter of the shank (130) and the outer diameter of the flange (136).

2. The swage collar (114) of claim 1,
wherein when the shoulder (140) is in its deformed state, the scalloped shoulder (140) includes a curved portion including a radius of curvature.

3. The swage collar (114) of claim 1,
wherein the radius of curvature is within a range of about 12.10 mm (=0.476 inch) to about 18.14 mm (= 0.714 inch).

4. The swage collar (114) of one of the claims 1 to 3,
wherein the shank (130) includes a bore (138) extending from the first end (132) to the second end (134) of the shank (130), an inner surface defined by the bore (138), and a fit-up tab (142) extending from the inner surface.

5. The swage collar (114) of one of the claims 1 to 4,
wherein the swage collar (114) further comprises at least one material selected from the group consisting of low carbon steel, annealed low carbon steel, and unannealed low carbon steel.

6. The swage collar (114) of one of the claims 1 to 5,
wherein the swage collar (114) is as-headed.

7. A fastener (10), comprising:
- a pin member (12) having an elongated shank portion (16) which terminates at one end in a head (18) and includes a threaded portion (20) having a plurality of threads (22) with lock grooves (24); and
- a swage collar (114) according to one of the Claims 1 to 6, wherein the swage collar (114) is adapted and suited to be swaged onto the lock grooves (24) of the threaded portion (20) of the pin member (12), during which the shoulder (140) is deformed from an undeformed state to a deformed state, wherein the shoulder (140) is blended with the outside diameter of the shank (130) of the swage collar (114) and to the outer diameter of the flange (136).

8. The fastener of claim 7,
wherein the pin member (12) includes a pull portion having a plurality of pull grooves.

9. A method for installing a swage collar (114), the swage collar (114) comprising:
- a shank (130) having a first end (132), a second end (134) opposite the first end (132), and an outside diameter;
- a flange (136) extending circumferentially from the first end (132) of the shank (130) and having an outer diameter; and
- a scalloped shoulder (140) formed at a location proximate to where the first end (132) of the shank (130) transitions to the flange (136),
wherein the method comprises the step of swaging the swage collar, wherein during swaging, the shoulder (140) is deformed from an undeformed state to a deformed state, in which the shoulder is blended with the outside diameter of the shank (130) and the outer diameter of the flange (136).

## Patentansprüche

1. Presshülse (114) in einem nicht deformierten Zustand, welche Folgendes aufweist:
- einen Schaft (130), welcher ein erstes Ende (132), gegenüberliegend dem ersten Ende (132) ein zweites Ende (134), und einen Außendurchmesser aufweist;
- einen Flansch (136), welcher sich von dem ersten Ende (132) des Schafts (130) umlaufend erstreckt und einen äußeren Durchmesser aufweist;
**gekennzeichnet durch**
- eine gezahnte Schulter (140), welche an einer Position ausgebildet ist nahe der Stelle, an welcher das erste Ende (132) des Schafts (130) in den Flansch (136) übergeht,
wobei die Presshülse (114) dazu ausgebildet und geeignet ist, gepresst zu werden, wobei im Verlauf dessen die gezahnte Schulter (140) von einem nicht deformierten Zustand in einen deformierten Zustand verformt wird, wobei die gezahnte Schulter (140) in dem deformierten Zustand mit dem Außendurchmesser des Schafts (130) und dem äußeren Durchmesser des Flansches (136) vereinigt wird.

2. Presshülse (114) nach Anspruch 1,
wobei die gezahnte Schulter (140), wenn die Schulter (140) in ihrem deformierten Zustand ist, einen gebogenen Bereich aufweist, welcher einen Krümmungsradius aufweist.

3. Presshülse (114) nach Anspruch 1,
wobei der Krümmungsradius sich innerhalb eines Bereichs von etwa 12,10 mm (= 0,476 inch) bis etwa 18,14 mm (= 0,714 inch) befindet.

4. Presshülse (114) nach einem der Ansprüche 1 bis 3,
wobei der Schaft (130) eine Bohrung (138), welche sich von dem ersten Ende (132) zu dem zweiten Ende (134) des Schafts (130) erstreckt, eine innere Oberfläche, welche durch die Bohrung (138) festgelegt ist, und einen Passstreifen (142) aufweist, welcher sich von der inneren Oberfläche aus erstreckt.

5. Presshülse (114) nach einem der Ansprüche 1 bis 4,
wobei die Presshülse (114) ferner mindestens eines der folgenden Materialien aufweist: kohlenstoffarmer Stahl, getemperter kohlenstoffarmer Stahl, und nicht getemperter kohlenstoffarmer Stahl.

6. Presshülse (114) nach einem der Ansprüche 1 bis 5,
wobei die Presshülse (114) kalt verfestigt ist (as-headed).

7. Befestigungselement (10), welches Folgendes aufweist:
- ein Stiftelement (12), welches einen länglichen Schaftbereich (16) aufweist, welcher an einem Ende in einem Kopf (18) endet und einen Gewindebereich (20) aufweist, welcher eine Vielzahl von Windungen (22) mit Sperrkerben (24) aufweist; und
- eine Presshülse (114) gemäß einem der Ansprüche 1 bis 6,
wobei die Presshülse (114) dazu ausgebildet und geeignet ist, um auf die Sperrkerben(24) des Gewindebereichs (20) des Stiftelements (12) gepresst zu werden, wobei im Verlauf dessen die Schulter (140) von einem nicht deformierten Zustand in einen deformierten Zustand verformt wird, wobei die Schulter (140) mit dem Außendurchmesser des Schafts (130) der Presshülse (114) und dem äußeren Durchmesser des Flansches (136) vereinigt wird.

8. Befestigungselement nach Anspruch 7,
wobei das Stiftelement (12) einen Anziehbereich aufweist, welcher eine Vielzahl von Anziehkerben aufweist.

9. Verfahren zum Montieren einer Presshülse (114),
wobei die Presshülse (114) Folgendes aufweist:
- einen Schaft (130), welcher ein erstes Ende (132), gegenüberliegend dem ersten Ende (132) ein zweites Ende (134), und einen Außendurchmesser aufweist;
- einen Flansch (136), welcher sich von dem ersten Ende (132) des Schafts (130) umlaufend erstreckt und einen Außendurchmesser aufweist; und
- eine gezahnte Schulter (140), welche an einer Position ausgebildet ist nahe der Stelle, an welcher das erste Ende (132) des Schafts (130) in den Flansch (136) übergeht,
wobei das Verfahren folgenden Schritt aufweist: Pressen der Presshülse, wobei die Schulter (140) während des Pressens von einem nicht deformierten Zustand in einen deformierten Zustand verformt wird, wobei die Schulter in dem deformierten Zustand mit dem Außendurchmesser des Schafts (130) und dem äußeren Durchmesser des Flansches (136) vereinigt wird.

## Revendications

1. Collier de sertissage (114) dans un état non déformé, comprenant:
- un fût (130) ayant une première extrémité (132), une seconde extrémité (134) opposée à la première extrémité (132), et un diamètre extérieur;
- une bride (136) s'étendant circonférentiellement depuis la première extrémité (132) du fût (130) et ayant un diamètre extérieur;
**caractérisé par**
- un épaulement échancré (140) formé un emplacement à proximité de l'endroit où la première extrémité (132) du fût (130) subit une transition vers la bride (136),
dans lequel le collier de sertissage (114) est adapté et approprié à être serti, opération pendant laquelle l'épaulement échancré (140) est déformé depuis un état non déformé vers un état déformé dans lequel l'épaulement échancré (140) est fusionné avec le diamètre extérieur du fût (130) et le diamètre extérieur de la bride (136).

2. Collier de sertissage (114) selon la revendication 1,
dans lequel quand l'épaulement (140) est dans son état déformé, l'épaulement échancré (140) inclut une portion incurvée incluant un rayon de courbure.

3. Collier de sertissage (114) selon la revendication 1,
dans lequel le rayon de courbure est dans une plage d'environ 12,10 mm (= 0,476 pouces) à environ 18,14 mm (= 0,714 pouces).

4. Collier de sertissage (114) selon l'une des revendications 1 à 3, dans lequel le fût (130) inclut un perçage (138) s'étendant depuis la première extrémité (132) jusqu'à la seconde extrémité (134) du fût (130), une surface intérieure définie par le fût (138), et une languette d'engagement (142) s'étendant depuis la surface intérieure.

5. Collier de sertissage (114) selon l'une des revendications 1 à 4, dans lequel le collier de sertissage (114) comprend en outre au moins un matériau sélectionné parmi le groupe comprenant acier à faible taux de carbone, acier recuit à faible taux de carbone, et acier non recuit à faible taux de carbone.

6. Collier de sertissage (114) selon l'une des revendications 1 à 5, dans lequel le collier de sertissage (114) est brut de forge ("as headed").

7. Dispositif de fixation (10) comprenant:
- un élément en forme de tige (12) ayant une portion de fût allongée (16) qui se termine à une extrémité dans une tête (18) et inclut une portion filetée (20) ayant une pluralité de filets (22) avec des gorges de blocage (24); et
- un collier de sertissage (114) selon l'une des revendications 1 à 6, dans lequel le collier de sertissage (114) est adapté et approprié à être serti sur les gorges de blocage (24) de la portion filetée (20) de l'élément en forme de tige (12), opération pendant laquelle l'épaulement (140) est déformé depuis un état non déformé vers un état déformé, dans lequel l'épaulement (140) est fusionné avec le diamètre extérieur du fût (130) du collier de sertissage (114) et le diamètre extérieur de la bride (136).

8. Dispositif de fixation selon la revendication 7,
dans lequel l'élément en forme de tige (12) inclut une portion de traction ayant une pluralité de gorges de traction.

9. Procédé pour installer un collier de sertissage (114), le collier de sertissage (114) comprenant:
- un fût (130) ayant une première extrémité (132), une seconde extrémité (134) opposée à la première extrémité (132), et un diamètre extérieur;
- une bride (136) s'étendant circonférentiellement depuis la première extrémité (132) du fût (130) et ayant un diamètre extérieur; et
- un épaulement échancré (140) formé un emplacement à proximité de l'endroit où la première extrémité (132) du fût (130) subit une transition vers la bride (136),
dans lequel le procédé comprend l'étape consistant à sertir le collier de sertissage,
dans lequel, pendant le sertissage, l'épaulement (140) est déformé depuis un état de non déformé vers un état déformé dans lequel l'épaulement est fusionné avec le diamètre extérieur du fût (130) et avec le diamètre extérieur de la bride (136).
